# EUROPEAN PATENT APPLICATION

(11) **EP 3 547 073 A1**
(43) Date of publication of application: **02.10.2019**
(21) Application number: 18204894.2
(22) Date of filing: 07.11.2018
(51) Int. Cl.: G06F 1/16

(54) **DISPLAY SCREEN ASSEMBLY AND ELECTRONIC DEVICE**

(30) Priority: 27.03.2018 CN 201810259300; 27.03.2018 CN 201820427874 U
(71) Applicant: Guangdong Oppo Mobile Telecommunications Corp., Ltd, Dongguan, Guangdong 523860 (CN)
(72) Inventor: ZHANG, Wenzhen, Dongguan, Guangdong 523860 (CN); HU, Yanhao, Dongguan, Guangdong 523860 (CN)
(74) Representative: Manitz Finsterwald Patent- und Rechtsanwaltspartnerschaft mbB

(57) **Abstract**

Described are a display screen assembly and an electronic device. The display screen assembly includes: a display module including a display panel and a touch panel arranged on the display panel, the display module includes a first end; a first flexible circuit board arranged at the first end of the display module, the first flexible circuit board is electrically connected to the display panel to drive the display panel to implement a display function; and a second flexible circuit board arranged at the first end of the display module, the second flexible circuit board is electrically connected to the touch panel to drive the touch panel to implement a touch function.

## Description

### TECHNICAL FIELD

The present disclosure relates to the field of an electronic technology, and in particular to a display screen assembly and an electronic device.

### BACKGROUND

With the development of communication technology, electronic devices such as smart phones are becoming increasingly popular. In the use of the electronic devices, such as taking pictures, chatting, playing games, there are more and more functions of the electronic devices. Therefore, more and more components are mounted inside the electronic device. In particular, there are more and more components mounted on the side of a screen of the electronic device. When the electronic device has an unchanged size, a display area of a display screen is often sacrificed, thereby decreasing the display area of the display screen and reducing a screen-to-body ratio.

### SUMMARY

A display screen assembly and an electronic device are provided according to embodiments of the disclosure, thereby increasing a display area of the display screen assembly, and improving a screen-to-body ratio.

A display screen assembly is provided according to an embodiment of the disclosure, which includes a display module, a first flexible circuit board and a second flexible circuit board. The display module contains a display panel and a touch panel arranged on the display panel. The display module is provided with a first end, and the first end is at top of the display module when observed in a display orientation of the display module. The first flexible circuit board is arranged at the first end of the display module and is electrically connected to the display panel to drive the display panel to implement a display function. The second flexible circuit board is arranged at the first end of the display module and is electrically connected to the touch panel to drive the touch panel to implement a touch function.

An electronic device is further provided according to an embodiment of the present disclosure, which includes a back cover and a display screen assembly mounted on the back cover, and the display screen assembly is the above-described display screen assembly.

According to the display screen assembly of the present disclosure, the first flexible circuit board and the second flexible circuit board are both arranged on the top of the display module, and a non-display area is only disposed on the top of the display module rather than both ends of the display module. Therefore a display area of the display module is increased, and a screen-to-body ratio of the display screen assembly is improved.

### BRIEF DESCRIPTION OF DRAWINGS

In order to more clearly explain the technical solution in embodiments of the present disclosure, the drawings used in the description of the embodiments will be briefly described below. Apparently, the drawings in the following description are only some embodiments of the present disclosure. Those skilled in the art can obtain other drawings according to the drawings without any creative work.
FIG. 1 is a structural diagram illustrating an electronic device according to an embodiment of the present disclosure.
FIG. 2 is another structural diagram illustrating an electronic device according to an embodiment of the present disclosure.
FIG. 3 is a structural diagram illustrating a display screen assembly according to an embodiment of the present disclosure.
FIG. 4 is a perspective view of the display screen assembly illustrated in FIG. 3.
FIG. 5 is an enlarged view of an area A in the display screen assembly illustrated in FIG. 4.
FIG. 6 is a structural diagram illustrating a display module in the display screen assembly illustrated in FIG. 3.
FIG. 7 is a structural diagram illustrating a first flexible circuit board in the display screen assembly illustrated in FIG. 3.
FIG. 8 is another structural diagram illustrating a first flexible circuit board in the display screen assembly illustrated in FIG. 3.
FIG. 9 is a structural diagram illustrating a second flexible circuit board in the display screen assembly illustrated in FIG. 3.
FIG. 10 is another structural diagram illustrating a second flexible circuit board in the display screen assembly illustrated in FIG. 3.
FIG. 11 is a sectional view of the display screen assembly illustrated in FIG. 3 along a line PI-PI.
FIG. 12 is an enlarged view of an area B in the sectional view illustrated in FIG. 11.
FIG. 13 is another structural diagram illustrating a display screen assembly according to an embodiment of the present disclosure.
FIG. 14 is a further structural diagram illustrating a display screen assembly according to an embodiment of the present disclosure.
FIG. 15 is a structural diagram illustrating a first flexible circuit board in the display screen assembly illustrated in FIG. 14.
FIG. 16 is another structural diagram illustrating a first flexible circuit board in the display screen assembly illustrated in FIG. 14.
FIG. 17 is a structural diagram illustrating a third flexible circuit board in the display screen assembly illustrated in FIG. 14.
FIG. 18 is a sectional view of the display screen assembly illustrated in FIG. 14 along a line P2-P2.
FIG. 19 is an enlarged view of an area C in the sectional view illustrated in FIG. 18.

### DETAILED DESCRIPTION

The technical solutions in the embodiments of the present disclosure will be clearly and completely described with reference to the drawings in the embodiments of the present disclosure hereinafter. It is apparent that the described embodiments are only a part of the embodiments of the present disclosure rather than all of the embodiments. All other embodiments obtained by those skilled in the art based on the embodiments of the present disclosure without creative efforts fall within the scope of protection of the present disclosure.

In the description of the present disclosure, it is to be understood that, an orientation or a positional relationship indicated by the terms such as "width", "thickness", "upper", "lower", "front", "back", "left", "right", "horizontal", "top", "bottom", "inside", is the orientation or the positional relationship illustrated based on the drawings. They are merely for the convenience of describing the present disclosure and simplifying the description rather than indicating or implying that the apparatus or element must have a specific orientation, or be constructed and operated in a specific orientation. Therefore, the terms should not be construed as limiting the disclosure. Moreover, the terms "first" and "second" are only used for descriptive purposes and are not to be construed as indicating or implying a relative importance or implicitly indicating the number of the indicated technical features. Thereby, features defined by "first" or "second" may include one or more features either explicitly or implicitly. In the description of the present disclosure, "a plurality" refers to two or more, unless otherwise being clearly and specifically defined.

In the description of the present disclosure, it should be noted that, the terms "mount", "mutually connect", and "connect" are to be understood broadly unless otherwise explicitly specified and defined. For example, they may be a fixed connection, a detachable connection, or integrated connection. They may also be a mechanical connection, electrical connection or communication with each other. They may be a direct connection, an indirect connection via an intermediate medium, internal communication between two elements or an interaction relationship between two elements. For those skilled in the art, specific meanings of the above terms in the present disclosure can be understood based on practical conditions.

In the present disclosure, that a first feature is located "over" or "under" a second feature may include the first and the second features directly contact, or the first and the second features do not directly contact but contact through another feature therebetween, unless otherwise explicitly specified and defined. Moreover, that the first feature is located "over", "above" and "on an upper part of" the second feature includes the first feature is directly above and obliquely above the second feature, or merely indicating that a horizontal height of the first feature is greater than that of the second feature. That the first feature is located "under", "below" and "on a lower part of" the second feature includes that the first feature is directly below and obliquely below the second feature, or merely indicating that the horizontal height of the first feature is less than that of the second feature.

The following disclosure provides many different embodiments or examples for implementing the different structures of the present disclosure. In order to simplify the present disclosure, components and settings of the specific examples are described below. Of course, they are merely examples and not intended to limit the present disclosure. In addition, in the present disclosure, reference numerals and/or reference characters/letters may be repeated in different examples. The repeat is for the purpose of simplicity and clarity, and does not indicate the relationship between the various discussed embodiments and/or arrangements. Moreover, the present disclosure provides examples of various specific processes and materials, but those skilled in the art will recognize the application of other processes and/or the use of other materials.

The present disclosure relates to a display screen assembly. The display screen assembly includes: a display module containing a display panel and a touch panel arranged on the display panel, wherein the display module is provided with a first end, and the first end is at top of the display module when observed in a display orientation of the display module; a first flexible circuit board arranged at the first end of the display module, wherein the first flexible circuit board is electrically connected to the display panel to drive the display panel to implement a display function; and a second flexible circuit board arranged at the first end of the display module, wherein the second flexible circuit board is electrically connected to the touch panel to drive the touch panel to implement a touch function.

In at least one embodiment, the display panel may include a first surface and a second surface opposite to the first surface, the touch panel may include a third surface and a fourth surface opposite to the third surface, the second surface of the display panel may be in contact with the third surface of the touch panel, and the first flexible circuit board and the second flexible circuit board may be arranged on a side of the first surface of the display panel.

In at least one embodiment, the first flexible circuit board may include a first bending portion, wherein the first bending portion may be extended around the first end to a side of the second surface of the display panel and connected to the second surface of the display panel.

In at least one embodiment, the second surface of the display panel may include a first portion and a second portion, a projection of the third surface of the touch panel on the display panel may be located in the second portion, and the first bending portion of the first flexible circuit board may be connected to the first portion of the second surface of the display panel.

In at least one embodiment, the first portion may be located at an upper end of the display panel and may be close to the first end of the display module; and the second portion may be adjacent to the first portion and may be extended away from the first end.

In at least one embodiment, the second flexible circuit board may include a second bending portion, the second bending portion may be extended around the first end to a side of the fourth surface of the touch panel, and connected to the fourth surface of the touch panel.

In at least one embodiment, a part of the second flexible circuit board may be stacked on the first flexible circuit board.

In at least one embodiment, the display module may be provided with a first notch, and the first notch is located at the first end.

In at least one embodiment, the first flexible circuit board or the second flexible circuit board may be provided with a second notch, and the second notch may be opposite to the first notch on the display module.

In at least one embodiment, a width of the second notch may be greater than or equal to a width of the first notch, and a height of the second notch may be greater than or equal to a height of the first notch.

In at least one embodiment, the first notch may be located in a middle of or at a corner of the first end.

In at least one embodiment, the display screen assembly may further include a third flexible circuit board, wherein the third flexible circuit board may be arranged at the first end of the display module, the first flexible circuit board and the second flexible circuit board may be electrically connected to the third flexible circuit board respectively.

In at least one embodiment, the first flexible circuit board may be connected to the third flexible circuit board via an anisotropic conductive film, and the second flexible circuit board may be connected to the third flexible circuit board via an anisotropic conductive film.

In at least one embodiment, the display screen assembly may further include a glass cover plate, and the glass cover plate may be arranged on a side of the touch panel of the display module.

In at least one embodiment, an optical adhesive may be provided between the glass cover plate and the touch panel of the display module.

The present disclosure relates to an electronic device. The electronic device includes a back cover and a display screen assembly mounted on the back cover, wherein the display screen assembly includes: a display module, containing a display panel and a touch panel arranged on the display panel, wherein the display module is provided with a first end, and the first end is at top of the display module when observed in a display orientation of the display module; a first flexible circuit board arranged at the first end of the display module, wherein the first flexible circuit board is electrically connected to the display panel to drive the display panel to implement a display function; and a second flexible circuit board arranged at the first end of the display module, wherein the second flexible circuit board is electrically connected to the touch panel to drive the touch panel to implement a touch function.

In at least one embodiment, a part of the second flexible circuit board may be stacked on the first flexible circuit board.

In at least one embodiment, the electronic device may further include functional components, the display screen assembly may be provided with a notch, and the functional components may be arranged within the notch.

In at least one embodiment, the notch may include a first notch.

In at least one embodiment, the first notch may be located at the first end of the display module.

In at least one embodiment, the notch may further include a second notch, the first flexible circuit board or the second flexible circuit board may be provided with the second notch, and the second notch may be opposite to the first notch on the display module.

In at least one embodiment, a width of the second notch may be greater than or equal to a width of the first notch, and a height of the second notch may be greater than or equal to a height of the first notch.

In at least one embodiment, the first notch may be located in a middle of or at a corner of the first end.

In at least one embodiment, the display panel may include a first surface and a second surface opposite to the first surface, the touch panel may include a third surface and a fourth surface opposite to the third surface, the second surface of the display panel may be in contact with the third surface of the touch panel, and the first flexible circuit board and the second flexible circuit board may be arranged on a side of the first surface of the display panel.

In at least one embodiment, the first flexible circuit board may include a first bending portion, wherein the first bending portion may be extended around the first end to a side of the second surface of the display panel and connected to the second surface of the display panel.

In at least one embodiment, the second surface of the display panel may include a first portion and a second portion, a projection of the third surface of the touch panel on the display panel may be located in the second portion, and the first bending portion of the first flexible circuit board may be connected to the first portion of the second surface of the display panel.

In at least one embodiment, the first portion may be located at an upper end of the display panel and may be close to the first end of the display module; and the second portion may be adjacent to the first portion and may be extended away from the first end.

In at least one embodiment, the second flexible circuit board may include a second bending portion, the second bending portion may be extended around the first end to a side of the fourth surface of the touch panel, and connected to the fourth surface of the touch panel.

In at least one embodiment, the display screen assembly may include: a third flexible circuit board, wherein the third flexible circuit board may be arranged at the first end of the display module, the first flexible circuit board and the second flexible circuit board may be electrically connected to the third flexible circuit board respectively.

In at least one embodiment, the first flexible circuit board may be connected to the third flexible circuit board via an anisotropic conductive film, and the second flexible circuit board may be connected to the third flexible circuit board via an anisotropic conductive film.

In at least one embodiment, the display screen assembly may include: a glass cover plate, and the glass cover plate may be arranged on a side of the touch panel departing from the display panel.

In at least one embodiment, an optical adhesive may be provided between the glass cover plate and the touch panel.

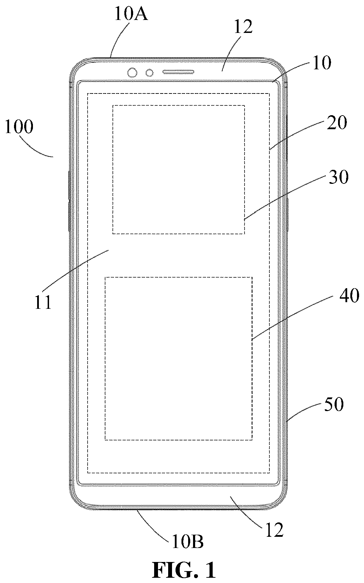

An electronic device is provided according to an embodiment of the present disclosure. The electronic device may be a smart phone, a tablet computer or other devices. In some embodiments, as illustrated in FIG. 1, the electronic device 100 includes a display screen 10, a middle frame 20, a circuit board 30, a battery 40, and a back cover 50.

The display screen 10 is mounted on the back cover 50 to form a display surface of the electronic device 100. The display screen 10 as a front cover of the electronic device 100 forms an accommodating space with the back cover 50 for accommodating other electronic components or functional components of the electronic device 100. Moreover, the display screen 10 forms a display surface of the electronic device 100 for displaying images, texts and/or other information. The display screen 10 may be a liquid crystal display (LCD), an organic light-emitting diode display (OLED), or other types of the screen.

In some embodiments, as illustrated in FIG. 1, the display screen 10 may include a display area 11 and a non-display area 12. The display area 11 performs a display function of the display screen 10 for displaying images, texts and/or other information. The non-display area 12 does not display information. Functional components, such as a camera, a receiver, and a display screen touch electrode, may be set on the non-display area 12. In some embodiments, the non-display area 12 may include at least one area located at upper and lower of the display area 11.

It should be noted that, as illustrated in FIG. 1, the display screen 10 includes two ends 10A and 10B opposite to each other. In some scenarios, the display screen 10 may be displayed in a portrait mode or a landscape mode. Two ends 10A and 10B of the display screen are described here only in case of the display screen 10 in the portrait mode. The end 10A is the top of the display screen 10 when the display screen 10 displays information. Generally, information, such as time, battery indicator, signal strength, and/or a network type, may be displayed in the display area of the display screen 10 close to/near the top end. The end 10B is the bottom of the display screen 10 when the display screen 10 displays information. Generally, a taskbar may be displayed in the display area of the display screen 10 close to/near the bottom end, and the taskbar may be configured to display icons of applications used frequently by a user.

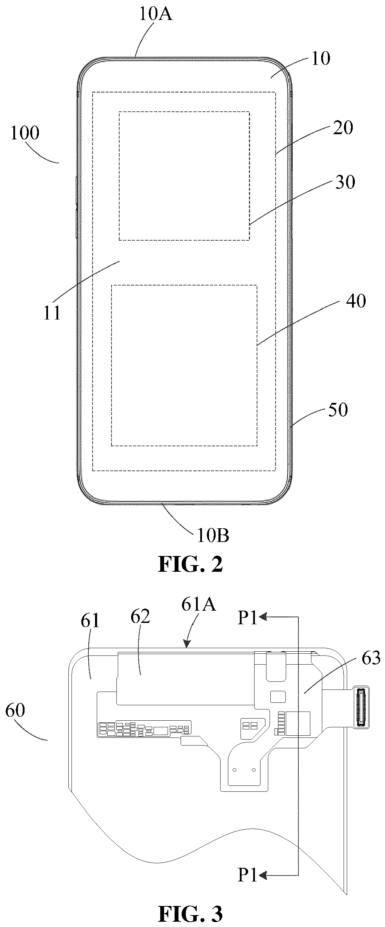

In some embodiments, as illustrated in FIG. 2, the display screen 10 may be an all screen/full screen display/full vision display. In this case, the display screen 10 can display information in full screen, so that the electronic device 100 has a large screen-to-body ratio. The display screen 10 includes only the display area 11 and does not include the non-display area. In this time, functional components such as a camera and a proximity sensor of the electronic device 100 may be hidden under the display screen 10, and a fingerprint recognition module of the electronic device 100 may be arranged on the back of the electronic device 100.

The structure of the middle frame 20 may be in a thin plate shape, a sheet shape, or a framework with a through hole. The middle frame 20 may be accommodated in the accommodating space formed by the display screen 10 and the back cover 50. The middle frame 20 is configured to provide supporting function so as to mount the electronic components and functional components in the electronic device 100 together to form a complete electronic device. For example, the functional components such as a camera, a receiver, a circuit board, and/or a battery in the electronic device 100 can be mounted to the middle frame 20 for being fixed.

The circuit board 30 is mounted inside the accommodating space. For example, the circuit board 30 may be mounted on the middle frame 20 and be accommodated in the accommodating space together with the middle frame 20. The circuit board 30 may be a mainboard of the electronic device 100. The processor of the electronic device 100 may be arranged on the circuit board 30. The circuit board 30 may further be integrated with one, two or more of functional components such as a motor, a microphone, a speaker, a receiver, a headphone interface, a universal serial bus interface (USB interface), a camera, a distance sensor, an ambient light sensor, a gyroscope. Moreover, the display screen 10 may be electrically connected to the circuit board 30.

In some embodiments, a display control circuit is provided on the circuit board 30. The display control circuit outputs an electrical signal to the display screen 10 so as to control the display screen 10 to display information.

The battery 40 is mounted inside the accommodating space. For example, the battery 40 may be mounted on the middle frame 20 and accommodated in the accommodating space along with the middle frame 20. The battery 40 may be electrically connected to the circuit board 30 so that the battery 40 supplies power to the electronic device 100. A power management circuit may be provided on the circuit board 30. The power management circuit is configured to distribute the voltage provided from the battery 40 to various electronic components in the electronic device 100.

The back cover 50 is configured to form an external profile/contour of the electronic device 100. The back cover 50 may be integrally formed. When forming the back cover 50, a hole for a rear camera, a mounting hole for a fingerprint recognition module and other structures may be formed on the back cover 50.

In some embodiments, the back cover 50 may be made of metal, such as a magnesium alloy, stainless steel and other metals. It should be noted that, the material of the back cover 50 according to an embodiment of the present disclosure is not limited thereto, and other materials may be used. For example, the back cover 50 may be plastic, or ceramic. For another example, the back cover 50 may include a plastic part and a metal part, and the metal and plastic are cooperated with each other to form the structure of the back cover 50. Specifically, the metal part may be formed first. For example, a magnesium alloy substrate is formed by injection molding, and the plastic is molded on the magnesium alloy substrate to form a plastic substrate. A complete back cover structure is finished.

In an embodiment of the present disclosure, the electronic device 100 further includes a display screen assembly. The display screen assembly is mounted on the back cover 50. The display screen assembly may include the above-described display screen 10 and a flexible circuit board for driving the display screen 10. The display screen assembly can implement a display function and a touch function of the electronic device 100.

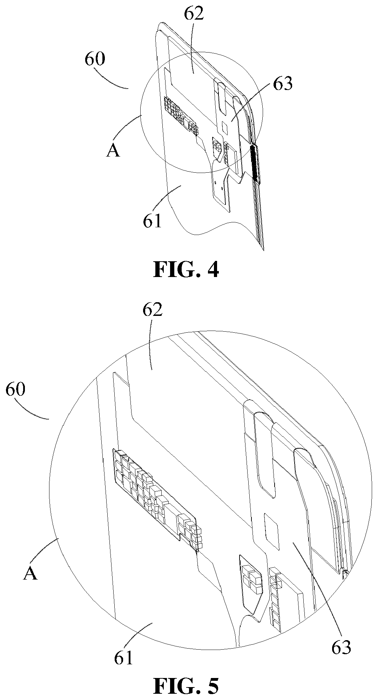

As illustrated in FIG. 3 to FIG. 5, the display screen assembly 60 includes a display module 61, a first flexible circuit board 62, and a second flexible circuit board 63. The first flexible circuit board 62 and the second flexible circuit board 63 are respectively arranged on the display module 61. A part of the second flexible circuit board 63 may be stacked on/overlaps the first flexible circuit board 62. That is, the first flexible circuit board 62 may be covered with/by the part of the second flexible circuit board 63.

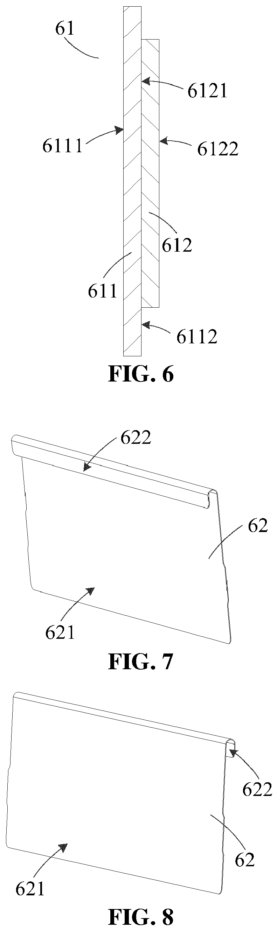

As illustrated in FIG. 6, the display module 61 includes a display panel 611 and a touch panel 612 arranged on the display panel 611. Furthermore, the display module 61 also includes at least one of: light emitting diode (LED) lights, printed circuit board (PCB) boards, driver integrated circuit (IC), touch IC, buffer foam, resistors, capacitors and plastic kits. The display panel 611 is configured to implement a display function of the electronic device 100 so as to display images, texts and/or other information. The touch panel 612 is configured to implement a touch function of the electronic device 100, so that the user can control the electronic device 100 by pressing the touch panel 612.

The display module 61 includes a first end 61A. The first end 61A is at top of the display module 61 when observed in a display orientation of the display module 61, i.e., the first end 61A is the top of the display module 61 when the display module 61 displays information. The first end 61A can refer to the description of the above-described top end of the display screen 10.

The first flexible circuit board 62 is arranged at the first end 61A of the display module 61. The first flexible circuit board 62 is electrically connected to the display panel 611 of the display module 61, so as to drive the display panel 611 to implement the display function. It can be understood that, the first flexible circuit board 62 is further/also electrically connected to the circuit board 30 in/of the electronic device 100. Thereby, a control signal generated by a processor of the electronic device 100 may be sent by the first flexible circuit board 62 to the display panel 611, so as to control the display panel 611.

The second flexible circuit board 63 is arranged at the first end 61A of the display module 61. The second flexible circuit board 63 is electrically connected to the touch panel 612 of the display module 61, so as to drive the touch panel 612 to implement the touch function. It can be understood that, the second flexible circuit board 63 is further electrically connected to the circuit board 30 in the electronic device 100. Thereby, a touch instruction received by the touch panel 612 may be sent by the second flexible circuit board 63 to the processor of the electronic device 100.

In an embodiment of the present disclosure, the first flexible circuit board 62 and the second flexible circuit board 63 are both arranged on the top of the display module 61. Thereby, a non-display area needs to be only arranged on the top of the display module 61 rather than arranged at both ends of the display module 61. That is, the display area of the display module 61 can be increased, thereby improving a screen-to-body ratio of the display screen assembly 60.

In some embodiments, as illustrated in FIG. 6, the display panel 611 includes a first surface 6111 and a second surface 6112 opposite to the first surface 6111. After the electronic device 100 is mounted, the first surface 6111 is hidden inside the electronic device 100, and the second surface 6112 faces the user.

The touch panel 612 includes a third surface 6121 and a fourth surface 6122 opposite to the third surface 6121. After the electronic device 100 is mounted, the third surface 6121 is hidden inside the electronic device 100, and the fourth surface 6122 faces the user. The fourth surface 6122 is a pressing surface when the user performs a touch operation.

The second surface 6112 of the display panel 611 is in contact with the third surface 6121 of the touch panel 612. The first flexible circuit board 62 and the second flexible circuit board 63 are both arranged on a side of the first surface 6111 of the display panel 611/a side of the display panel 611 at the first surface 6111. That is, the first flexible circuit board 62 and the second flexible circuit board 63 are both arranged on a side departing from/away from the touch panel 612.

In some embodiments, as illustrated in FIG. 7 and FIG. 8, the first flexible circuit board 62 includes a first body portion 621 and a first bending portion 622. The first body portion 621 is connected with the first bending portion 622. The first bending portion 622 is extended from one end of the first body portion 621 and is bent toward an opposite end of the first body portion 621. The first bending portion 622 is configured to connect to the display panel 611.

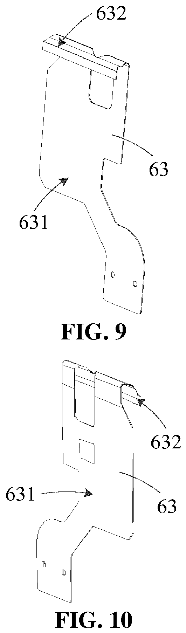

In some embodiments, as illustrated in FIG. 9 and FIG. 10, the second flexible circuit board 63 includes a second body portion 631 and a second bending portion 632. The second body portion 631 is connected with the second bending portion 632. The second bending portion 632 is extended from one end of the second body portion 631 and is bent toward an opposite end of the second body portion 631. The second bending portion 632 is configured to connect to the touch panel 612.

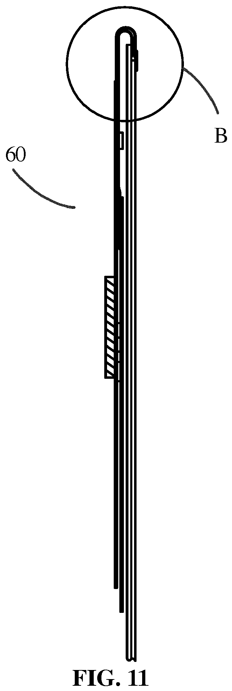

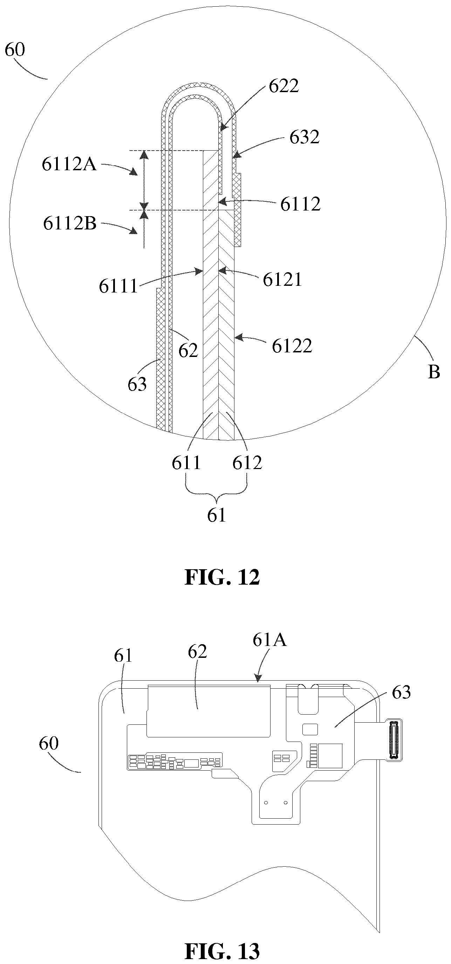

In some embodiments, as illustrated in FIG. 11 and FIG. 12, FIG. 11 illustrates a sectional view of the display screen assembly 60 in FIG. 3 along a line PI-PI, and FIG. 12 illustrates an enlarged view of an area B of the sectional view in FIG. 11.

The first bending portion 622 of the first flexible circuit board 62 is extended around the first end 61A to a side of the second surface 6112 of the display panel 611. The first bending portion 622 is connected to the second surface 6112 of the display panel 611 so that the first flexible circuit board 62 and the display panel 611 are electrically connected.

The second bending portion 632 of the second flexible circuit board 63 is extended around the first end 61A to a side of the fourth surface 6122 of the touch panel 612. The second bending portion 632 is connected to the fourth surface 6122 of the touch panel 612 so that the second flexible circuit board 63 and the touch panel 612 are electrically connected.

In some embodiments, as illustrated in FIG. 12, the second surface 6112 of the display panel 611 includes a first portion 6112A and a second portion 6112B. The first portion 6112A is located at an upper end of the display panel 611 and is close to the first end 61A of the display module 61. The second portion 6112B is adjacent to the first portion 6112A and is extended away from the first end 61A. A projection of the third surface 6121 of the touch panel 612 on the display panel 611 is located at the second portion 6112B. That is, the projection of the third surface 6121 of the touch panel 612 on the display panel 611 is smaller/less than the second surface 6112 of the display panel 611. The first bending portion 622 of the first flexible circuit board 62 is connected to the first portion 6112A of the second surface 6112 of the display panel 611.

In some embodiments, as illustrated in FIG. 13, FIG. 13 illustrates another structural diagram of the display screen assembly 60. The display screen assembly 60 illustrated in FIG. 13 differs from the display screen assembly 60 illustrated in FIG. 3 in that: the first flexible circuit board 62 and the second flexible circuit board 63 are spaced apart on the display module 61. In this case, there is no overlap between the first flexible circuit board 62 and the second flexible circuit board 63. In addition, the first flexible circuit board 62 and the second flexible circuit board 63 are both electrically connected to the display module 61.

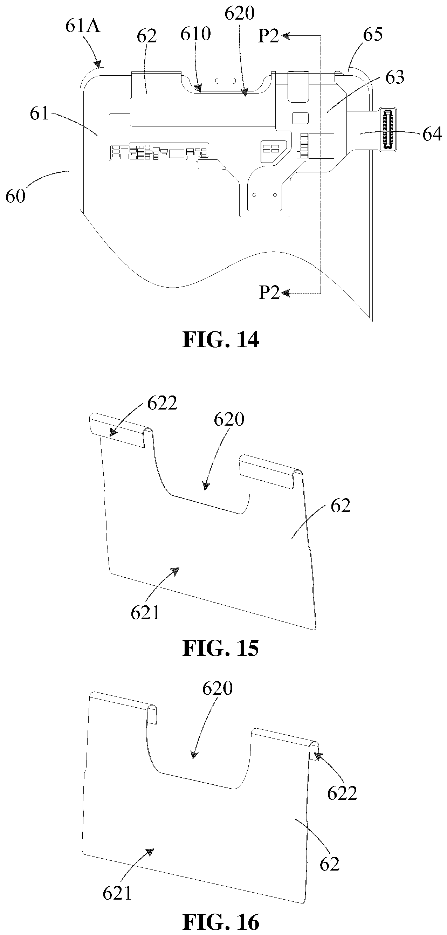

In some embodiments, as illustrated in FIG. 14, FIG. 14 illustrates another structural diagram of the display screen assembly 60. The display screen assembly 60 illustrated in FIG. 14 differs from the display screen assembly 60 illustrated in FIG. 3 in that: the display module 61 is provided with a first notch 610. The first notch 610 is located at the first end 61A of the display module 61. The first notch 610 may be arranged in the middle of the first end 61A or at a corner of the first end 61A. For example, the first notch 610 may be arranged in the middle of the first end 61A. In this case, the distances from the left and right sides of the display module 61 to a middle point of the first notch 610 are equal. For another example, the first notch 610 may be arranged at an upper left corner or an upper right corner of the display module 61 illustrated in FIG. 14.

It should be noted that, the first notch 610 passes through/penetrates the display module 61 along a thickness direction of the display module 61.

In some embodiments, as illustrated in FIG. 14 to FIG. 16, the first flexible circuit board 62 is provided with a second notch 620. The second notch 620 is opposite to the first notch 610 on the display module 61. Thereby, the first notch 610 and the second notch 620 can form an integral notch on the display screen assembly 60.

It should be noted that, in some embodiments, the second notch 620 may also be arranged on the second flexible circuit board 63 as long as a position of the second notch 620 is opposite to a position of the first notch 610 on the display module 61. In the embodiment of the present disclosure, it is not limited to whether the second notch 620 is arranged on the first flexible circuit board 62 or arranged on the second flexible circuit board 63.

In some embodiments, a width of the second notch 620 is greater than or equal to a width of the first notch 610. A height of the second notch 620 is greater than or equal to a height of the first notch 610. That is, an integral size of the second notch 620 is greater than or equal to that of the first notch 610. Thereby, the first notch 610 and the second notch 620 can form an integral notch on the display screen assembly 60, and the first flexible circuit board 62 or the second flexible circuit board 63 does not block/hinder/obstruct the formed integral notch.

In some embodiments, the first notch 610 and the second notch 620 may form an integral notch on the display screen assembly 60. Functional components may be arranged within the integral notch formed on the display screen assembly 60. The functional components may include a camera module, a flashlight, a receiver, a proximity sensor, an ambient light sensor, a fingerprint recognition module, and the like of the electronic device 100.

In some embodiments, as illustrated in FIG. 14, the display screen assembly 60 further includes a third flexible circuit board 64. The third flexible circuit board 64 is arranged on the display module 61. Specifically, the third flexible circuit board 64 may be arranged at the first end 61A of the display module 61. The first flexible circuit board 62 and the second flexible circuit board 63 are electrically connected to the third flexible circuit board 64 respectively.

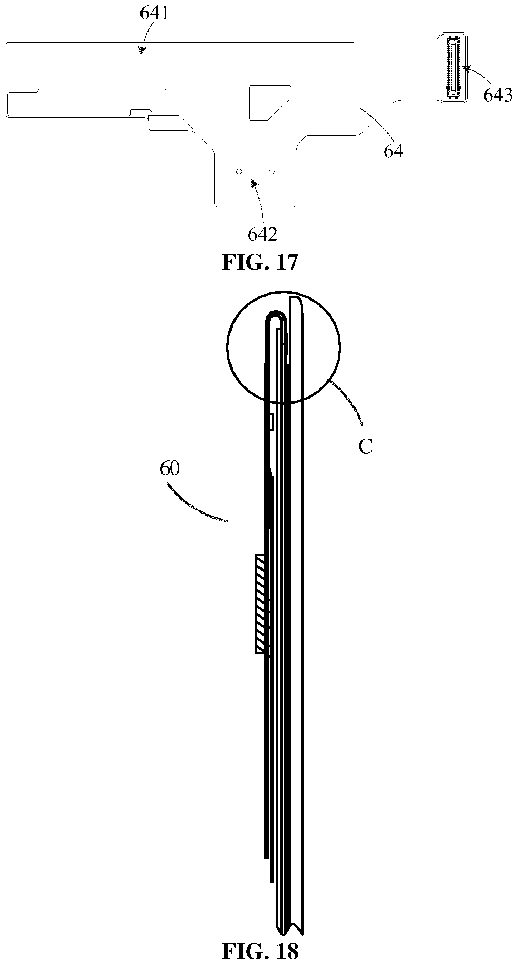

As illustrated in FIG. 17, the third flexible circuit board 64 includes a first connection portion 641, a second connection portion 642, and a third connection portion 643. The first connecting portion 641, the second connecting portion 642, and the third connecting portion 643 are spaced apart from each other.

The first connecting portion 641 is connected to the first flexible circuit board 62, and the second connecting portion 642 is connected to the second flexible circuit board 63. Thereby, the first flexible circuit board 62 and the second flexible circuit board 63 can be electrically connected to the third flexible circuit board 64.

The third connection portion 643 is connected to the circuit board 30 in the electronic device 100. Thereby, the third flexible circuit board 64 can be electrically connected to the circuit board 30 in the electronic device 100. The first flexible circuit board 62 and the second flexible circuit board 63 can be electrically connected to the circuit board 30 in the electronic device 100 via the third flexible circuit board 64.

In some embodiments, the first flexible circuit board 62 can be connected to the third flexible circuit board 64 via an anisotropic conductive film (ACF). The second flexible circuit board 63 can also be connected to the third flexible circuit board 64 via the ACF.

In some other embodiments, the first flexible circuit board 62 and the second flexible circuit board 63 may be respectively provided with a connecting seat. The first connecting portion 641, the second connecting portion 642, and the third connecting portion 643 of the third flexible circuit board 64 may also be respectively provided with a connecting seat. The first flexible circuit board 62 and the second flexible circuit board 63 are connected to the third flexible circuit board 64 via the connecting seats. The third flexible circuit board 64 is connected to the circuit board 30 in the electronic device 100 via the connecting seat.

In some embodiments, as illustrated in FIG. 14, the display screen assembly 60 further includes a glass cover plate 65. The glass cover plate 65 is arranged on the display module 61. The glass cover plate 65 may cover the display module 61, so as to protect the display module 61 from being scratched or damaged by water.

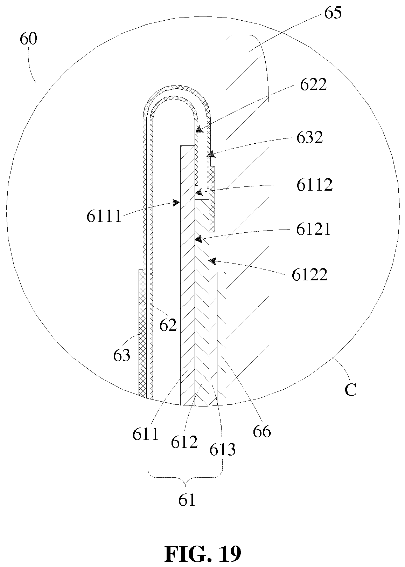

As illustrated in FIG. 18 and FIG. 19, FIG. 18 illustrates a sectional view of the display screen assembly 60 illustrated in FIG. 14 along a line P2-P2, and FIG. 19 illustrates an enlarged view of an area C in the sectional view illustrated in FIG. 18. The glass cover plate 65 is arranged on a side of the touch panel 612 in the display module 61. That is, the glass cover plate 65 is arranged away from the display panel 611 in the display module 61. Thereby, after the electronic device 100 is mounted, the glass cover plate 65 faces the user.

In some embodiments, an optical adhesive 66 is provided between the glass cover plate 65 and the touch panel 612 of the display module 61. The glass cover plate 65 is bound to the display module 61 via the optical adhesive 66. Moreover, the optical adhesive 66 is transparent and does not affect the display function of the display panel 611.

In some embodiments, the display module 61 further includes a polarizer 613. The polarizer 613 is arranged on a side of the touch panel 612 of the display module 61, that is, the polarizer 613 is arranged away from the display panel 611. The polarizer 613 is configured to polarize the light emitted by/from the display panel 611. In this case, the optical adhesive 66 is arranged between the polarizer 613 and the glass cover plate 65. The glass cover plate 65 is bound to the display module 61 via the optical adhesive 66.

The display screen assembly and the electronic device according to the embodiments of the present disclosure are described in detail above. The principles and embodiments of the present disclosure are set forth by the specific examples, and the description of the above embodiments is only for the purpose of understanding the present disclosure. Moreover, those skilled in the art will modify the specific embodiments and the scope of the disclosure according to the idea of the present disclosure. In summary, the content of the specification should not be construed as limiting the present disclosure.

## Claims

1. A display screen assembly (60), **characterized in that** the display screen assembly (60) comprises:
a display module (61), containing a display panel (611) and a touch panel (612) arranged on the display panel (611), wherein the display module (61) is provided with a first end (61A), and the first end (61A) is at top of the display module (61) when observed in a display orientation of the display module (61);
a first flexible circuit board (62) arranged at the first end (61A) of the display module (61), wherein the first flexible circuit board (62) is electrically connected to the display panel (611) to drive the display panel (611) to implement a display function; and
a second flexible circuit board (63) arranged at the first end (61A) of the display module (61), wherein the second flexible circuit board (63) is electrically connected to the touch panel (612) to drive the touch panel (612) to implement a touch function.

2. The display screen assembly (60) of claim 1, wherein the display panel (611) comprises a first surface (6111) and a second surface (6112) opposite to the first surface (6111), the touch panel (612) comprises a third surface (6121) and a fourth surface (6122) opposite to the third surface (6121), the second surface (6112) of the display panel (611) is in contact with the third surface (6121) of the touch panel (612), and the first flexible circuit board (62) and the second flexible circuit board (63) are arranged on a side of the first surface (6111) of the display panel (611);
wherein the first flexible circuit board (62) comprises a first bending portion (622), wherein the first bending portion (622) is extended around the first end (61A) to a side of the second surface (6112) of the display panel (611) and connected to the second surface (6112) of the display panel (611);
wherein the second surface (6112) of the display panel (611) comprises a first portion (6112A) and a second portion (6112B), a projection of the third surface (6121) of the touch panel (612) on the display panel (611) is located in the second portion (6112B), and the first bending portion (622) of the first flexible circuit board (62) is connected to the first portion (6112A) of the second surface (6112) of the display panel (611);
wherein the first portion (6112A) is located at an upper end of the display panel (611) and is close to the first end (61A) of the display module (61); and the second portion (6112B) is adjacent to the first portion (6112A) and is extended away from the first end (61A).

3. The display screen assembly of claim 1, wherein the display panel (611) comprises a first surface (6111) and a second surface (6112) opposite to the first surface (6111), the touch panel (612) comprises a third surface (6121) and a fourth surface (6122) opposite to the third surface (6121), the second surface (6112) of the display panel (611) is in contact with the third surface (6121) of the touch panel (612), and the first flexible circuit board (62) and the second flexible circuit board (63) are arranged on a side of the first surface (6111) of the display panel (611);
wherein the second flexible circuit board (63) comprises a second bending portion (632), the second bending portion (632) is extended around the first end (61A) to a side of the fourth surface (6122) of the touch panel (612), and connected to the fourth surface (6122) of the touch panel (612).

4. The display screen assembly (60) of any one of claims 1 to 3, wherein a part of the second flexible circuit board (63) is stacked on the first flexible circuit board (62).

5. The display screen assembly (60) of any one of claims 1 to 4, wherein the display module (61) is provided with a first notch (610), and the first notch (610) is located at the first end (61A);
wherein the first flexible circuit board (62) or the second flexible circuit board (63) is provided with a second notch (620), and the second notch (620) is opposite to the first notch (610) on the display module (61);
wherein a width of the second notch (620) is greater than or equal to a width of the first notch (610), and a height of the second notch (620) is greater than or equal to a height of the first notch (610).

6. The display screen assembly (60) of any one of claims 1 to 5, further comprising a third flexible circuit board (64), wherein the third flexible circuit board (64) is arranged at the first end (61A) of the display module (61), the first flexible circuit board (62) and the second flexible circuit board (63) are electrically connected to the third flexible circuit board (64) respectively;
wherein the first flexible circuit board (62) is connected to the third flexible circuit board (64) via an anisotropic conductive film, and the second flexible circuit board (63) is connected to the third flexible circuit board (64) via an anisotropic conductive film.

7. The display screen assembly (60) of any one of claims 1 to 6, further comprising a glass cover plate (65), and the glass cover plate (65) is arranged on a side of the touch panel (612) of the display module (61);
wherein an optical adhesive (66) is provided between the glass cover plate (65) and the touch panel (612) of the display module (61).

8. An electronic device (100), **characterized in that** the electronic device (100) comprises a back cover (50) and a display screen assembly (60) mounted on the back cover (50), wherein the display screen assembly (60) comprises:
a display module (61), containing a display panel (611) and a touch panel (612) arranged on the display panel (611), wherein the display module (61) is provided with a first end (61A), and the first end (61A) is at top of the display module (61) when observed in a display orientation of the display module;
a first flexible circuit board (62) arranged at the first end (61A) of the display module (61), wherein the first flexible circuit board (62) is electrically connected to the display panel (611) to drive the display panel (611) to implement a display function; and
a second flexible circuit board (63) arranged at the first end (61A) of the display module (61), wherein the second flexible circuit board (63) is electrically connected to the touch panel (612) to drive the touch panel (612) to implement a touch function.

9. The electronic device (100) of claim 8, wherein a part of the second flexible circuit board (63) is stacked on the first flexible circuit board (62).

10. The electronic device (100) of any one of claims 8 to 9, further comprising functional components, the display screen assembly (60) is provided with a notch, and the functional components are arranged within the notch;
wherein the notch includes a first notch (610), and the first notch (610) is located at the first end (61A) of the display module (61);
wherein the notch further includes a second notch (620), the first flexible circuit board (62) or the second flexible circuit board (63) is provided with the second notch (620), and the second notch (620) is opposite to the first notch (610) on the display module (61);
wherein a width of the second notch (620) is greater than or equal to a width of the first notch (610), and a height of the second notch (620) is greater than or equal to a height of the first notch (610).

11. The electronic device (100) of any one of claims 8 to 10, wherein the display panel (611) comprises a first surface (6111) and a second surface (6112) opposite to the first surface (6111), the touch panel (612) comprises a third surface (6121) and a fourth surface (6122) opposite to the third surface (6121), the second surface (6112) of the display panel (611) is in contact with the third surface (6121) of the touch panel (612), and the first flexible circuit board (62) and the second flexible circuit board (63) are arranged on a side of the first surface (6111) of the display panel (611).

12. The electronic device of claim 11, wherein the first flexible circuit board (62) comprises a first bending portion (622), wherein the first bending portion (622) is extended around the first end (61A) to a side of the second surface (6112) of the display panel (611) and connected to the second surface (6112) of the display panel (611);
wherein the second surface (6112) of the display panel (611) comprises a first portion (6112A) and a second portion (6112B), a projection of the third surface (6121) of the touch panel (612) on the display panel (611) is located in the second portion (6112B), and the first bending portion (622) of the first flexible circuit board (62) is connected to the first portion (6112A) of the second surface (6112) of the display panel (611);
wherein the first portion (6112A) is located at an upper end of the display panel (611) and is close to the first end (61A) of the display module (61); and the second portion (6112B) is adjacent to the first portion (6112A) and is extended away from the first end (61A).

13. The electronic device of claim 11, wherein the second flexible circuit board (63) comprises a second bending portion (632), the second bending portion (632) is extended around the first end (61A) to a side of the fourth surface (6122) of the touch panel (612), and connected to the fourth surface (6122) of the touch panel (612).

14. The electronic device (100) of any one of claims 8 to 13, wherein the display screen assembly (60) comprises: a third flexible circuit board (64), wherein the third flexible circuit board (64) is arranged at the first end (61A) of the display module (61), the first flexible circuit board (62) and the second flexible circuit board (63) are electrically connected to the third flexible circuit board (64) respectively;
wherein the first flexible circuit board (62) is connected to the third flexible circuit board (64) via an anisotropic conductive film, and the second flexible circuit board (63) is connected to the third flexible circuit board (64) via an anisotropic conductive film.

15. The electronic device (100) of any one of claims 8 to 14, wherein the display screen assembly (60) comprises: a glass cover plate (65), and the glass cover plate (65) is arranged on a side of the touch panel (612) departing from the display panel (611);
wherein an optical adhesive (66) is provided between the glass cover plate (65) and the touch panel (612).
